# EUROPÄISCHE PATENTSCHRIFT

(11) **EP 2 420 143 B1**
(45) Veröffentlichungstag und Bekanntmachung des Hinweises auf die Patenterteilung: **20.02.2013**
(21) Anmeldenummer: 11167300.0
(22) Anmeldetag: 24.05.2011
(51) Int. Cl.: A22C 21/00

(54) **Vorrichtung und Verfahren zum automatisierten Schneiden der Flügel von Geflügelkörpern**
Device and method for automated cutting off the wings of poultry carcasses
Dispositif et procédé de coupe automatisée des ailes de corps de volailles

(30) Priorität: 20.08.2010 DE 102010035387
(43) Veröffentlichungstag der Anmeldung: 22.02.2012
(73) Patentinhaber: NORDISCHER MASCHINENBAU RUD. BAADER GMBH + CO KG, 23560 Lübeck (DE)
(72) Erfinder: Landt, Andreas, 23560, Lübeck (DE)
(74) Vertreter: Stork Bamberger

(56) Entgegenhaltungen:
- DE-C1- 4 304 781
- US-A- 4 016 624
- US-A- 5 569 069
- US-A1- 2010 317 272

## Beschreibung

Die Erfindung betrifft eine Vorrichtung zum automatisierten Schneiden der Flügel von Geflügelkörpern, umfassend ein Fördermittel mit mindestens einem Transportsattel zum Aufnehmen und Halten der Geflügelkörper und Transportieren derselben Brust nach oben und mit dem Halsansatz voraus in Transportrichtung T durch die Vorrichtung entlang einer Trenneinrichtung, die Trenneinrichtung, die mehrere jeweils symmetrisch zu beiden Seiten des Fördermittels angeordnete Trennelementepaare aufweist, nämlich ein erstes Paar Schneidmesser zum Ausführen von Sehnentrennschnitten von der Rückenseite des Geflügelkörpers her im Bereich des Gelenks zwischen den Endstücken der Flügel und dem Geflügelkörper, ein zweites Paar Trennmesser zum vollständigen Trennen der Flügel zwischen den Endstücken und den Mittelstücken der Flügel und ein drittes Paar Schneidmesser zum Ausführen weiterer Sehnentrennschnitte von der Rückenseite des Geflügelkörpers her im Bereich der Gelenke zwischen den Endstücken der Flügel und dem Geflügelkörper, sowie ein Paar Führungsschienen und ein Paar umlaufende Förderketten, wobei auf jeder Seite des Fördermittels jeweils eine aus einer Führungsschiene und einer Förderkette gebildete Transporteinheit angeordnet ist, die sich von einem Bereich in Transportrichtung T vor der Trenneinrichtung bis hinter die Trenneinrichtung erstreckt und zum Erfassen und Führen der Flügel entlang der Trenneinrichtung ausgebildet und eingerichtet ist, wobei die beiden symmetrisch zum Fördermittel angeordneten Transporteinheiten in Transportrichtung T divergierend verlaufen, derart, dass die beiden Flügel eines Geflügelkörpers während des Transports entlang der Trenneinrichtung zunehmend vom Geflügelkörper weg bewegt werden.

Des Weiteren betrifft die Erfindung ein Verfahren zum automatisierten Schneiden der Flügel von Geflügelkörpern, umfassend die Schritte: Zuführen der Geflügelkörper mittels eines Fördermittels in den Bereich einer Trenneinrichtung, die mehrere, jeweils symmetrisch zu beiden Seiten eines Fördermittels angeordnete Trennelementepaare aufweist, Klemmen der Flügel im Bereich des Gelenks zwischen dem Endstück und dem Mittelstück des Flügels jeweils zwischen einer Führungsschiene und einer Förderkette einer zu beiden Seiten des Fördermittels angeordneten Transporteinheit, Trennen von Sehnen und Gewebeteilen von der Rückenseite des Geflügelkörpers her im Bereich des Gelenks zwischen den Endstücken der Flügel und dem Geflügelkörper mittels eines ersten Paares Schneidmesser, vollständiges Trennen der Flügel zwischen den Endstücken und den Mittelstücken der Flügel mittels eines zweiten Paares Trennmesser, Trennen von Sehnen und Gewebeteilen von der Rückenseite des Geflügelkörpers her im Bereich des Gelenks zwischen den Endstücken der Flügel und dem Geflügelkörper mittels eines dritten Paares Schneidmesser, wobei die Flügel während des Transports in Transportrichtung T zunehmend durch die Transporteinheiten nach außen vom Geflügelkörper weg gezogen werden und sämtliche Schnitte während des Transports der Geflügelkörper entlang der Trennelementepaare erfolgen.

Solche Vorrichtungen und Verfahren werden in der Nahrungsmittel verarbeitenden Industrie, insbesondere bei der Be- und Verarbeitung von Geflügel, eingesetzt. Die Körper geschlachteter Geflügeltiere, wie z.B. Huhn, Pute etc., weisen vor der weiteren Be- und Verarbeitung den eigentlichen Geflügelkörper mit den daran angelenkten Flügeln auf. Die Flügel sind grundsätzlich dreigliedrig aufgebaut. Direkt am Geflügelkörper ist über ein Gelenk das so genannte Endstück angelenkt. Über ein weiteres Gelenk ist das so genannte Mittelstück am Endstück angeordnet, wobei an dem Mittelstück auf der dem Endstück abgewandten Seite eine Spitze, der so genannten Tip, angeordnet ist.

Es sind Vorrichtungen und Verfahren bekannt, bei denen die Flügel insgesamt, also einschließlich der Endstücke, vom Geflügelkörper getrennt werden. Eine solche Vorrichtung ist beispielsweise aus der DE 43 04 781 C1 bekannt. Die darin beschriebene Vorrichtung zum Abtrennen der Flügel weist die Merkmale des Oberbegriffes des Anspruches 1 auf. Die beiden Schneidmesser des dritten Paares Trennelemente sind als so genannte Deltamesser ausgebildet. Diese Deltamesser weisen neben einem Grundkörper ein in Transportrichtung T nach vorne gerichtetes Horn auf, das zur Verlängerung der Schneide über den Grundkörper hinaus dient. Anders ausgedrückt weisen die Schneidmesser eine üblicherweise steigend verlaufende Schneide auf, die sich vom Grundkörper bis in den Bereich des Horns erstreckt. Diesen Schneidmessern ist jeweils eine Gegenlage zugeordnet, um das vollständige Durchtrennen der beim ersten Schnitt stehen gelassenen Sehnen und der Gewebeteile sicherzustellen. Durch die beiden Transporteinheiten, bei denen jeweils zwischen der Führungsschiene und der Förderkette eine Wirkverbindung hergestellt wird, durch die die Flügel im Bereich des Gelenkes zwischen dem Endstück und dem Mittelstück quasi eingeklemmt werden, derart, dass ein Teil (das Mittelstück mit dem Tip) des Flügels während des Transports entlang der Trenneinrichtung auf der dem Geflügelkörper abgewandten Seite der Führungsschienen und der am Geflügelkörper angelenkte Teil (Endstück) des Flügels auf der dem Geflügelkörper zugewandten Seite der Führungsschiene liegt, werden die Gelenkkugeln insbesondere im Übergang vom Endstück zum Geflügelkörper aus der Gelenkpfanne gezogen, so dass die Einschnitte des ersten Trennmesserpaares und des dritten Trennmesserpaares ohne Beschädigung der Knochen erfolgen. Da die Endstücke durch das dritte Paar Schneidmesser vollständig vom Geflügelkörper getrennt werden, kann der Geflügelkörper selbst mittels des Fördermittels in Transportrichtung T aus der Vorrichtung transportiert werden, während die abgetrennten Flügel bzw. die noch verbliebenen Endstücke durch die Transporteinheiten eingeklemmt bis an das Ende der Führungsschienen transportiert und dann durch die Förderketten seitlich vom Fördermittel weg transportiert werden. Zusammenfassend wird bei den bekannten Verfahren mit dem ersten Paar Trennelemente eine Art Vorschnitt durchgeführt, um das vollständige Trennen der Flügel im Bereich zwischen den Endstücken der Flügel und dem Geflügelkörper mit dem dritten Paar Trennelemente vorzubereiten bzw. diesem ausreichend Platz zum Eingriff in den Bereich des Gelenkes zwischen dem Endstück und dem Geflügelkörper zu schaffen, während zuvor die Mittelstücke (mit oder ohne Tip) von den Endstücken mit dem zweiten Paar Trennelemente entfernt werden.

Es hat sich jedoch gezeigt, dass es gewünscht sein kann, die Endstücke der Flügel nicht vollständig vom Geflügelkörper bzw. vom Brustfilet zu trennen, um dieses dann mit am Brustfilet befestigten und aufgerichtetem Flügelendstück zu präsentieren. Man spricht in diesem Zusammenhang vom so genannten Premium-Cut. Da die bisherigen Vorrichtungen und Verfahren jedoch ausschließlich dazu ausgebildet sind, die Flügel vollständig einschließlich der Endstücke vom Geflügelkörper zu trennen, ist stets eine manuelle Tätigkeit erforderlich. Man kann die gesamten Schnitte manuell ausführen. Alternativ kann man die bekannten, automatisierten Verfahren nach dem vollständigen Trennen der Flügel zwischen den Endstücken und den Mittelstücken, also dem zweiten Trennschnitt, stoppen und den letzten Verfahrensschritt manuell ausführen. Der manuelle Aufwand ist jedoch zum einen sehr hoch und damit kostenintensiv. Zum anderen erfordert das manuelle Trennen großer Erfahrung, so dass die Qualität der Premium-Cuts in Abhängigkeit der Bedienperson schwankt.

Es besteht daher die Aufgabe, eine Vorrichtung zu schaffen, die einen vollautomatisierten Premium-Cut gewährleistet. Die weitere Aufgabe besteht darin, ein entsprechendes Verfahren vorzuschlagen.

Diese Aufgabe wird durch eine Vorrichtung der eingangs genannten Art dadurch gelöst, dass die Schneidmesser des dritten Paares eine gegenlagenfreie Schnittstation bilden und jeweils eine Schneide aufweisen, die zum Ausführen von die Endstücke der Flügel am Geflügelkörper belassenden Teilschnitten ausgebildet und eingerichtet ist, und dass die seitlichen Führungsschienen in Transportrichtung T hinter der Trenneinrichtung jeweils eine Aussparung zur vertikalen Abstandsvergrößerung zwischen der Führungsschiene und der Förderkette aufweisen. Durch den Verzicht auf eine Gegenlage wird erreicht, dass das Produkt dem durch die Schneidmesser aufgebrachten Druck auf das Produkt zumindest geringfügig ausweichen kann, so dass das vollständige Durchschneiden erschwert wird. Die Schneide der Schneidmesser ist im Gegensatz zum Stand der Technik als eine Art Stummelschneide ausgebildet, so dass die Länge der Schneide gegenüber den bekannten Schneidmessern verkürzt ist. Dadurch lassen die Schneidmesser in ihrer Schneidposition einen Teil der Sehnen und Gewebeteile im Bereich des Gelenks zwischen den Endstücken und dem Geflügelkörper stehen. In Verbindung mit der fehlenden Gegenlage ist die erfindungsgemäße Ausbildung der Schneidstation in keiner Position in der Lage, das Endstück vollständig vom Geflügelkörper zu trennen. Durch die Aussparungen in den Führungsschienen und die damit erreicht Abstandsvergrößerung zwischen den Führungsschienen und den Förderketten wird die Klemmung der Flügel bzw. Endstücke aufgehoben. Anders ausgedrückt wird durch die Aussparung ein Freiraum für die Flügel bzw. die Endstücke geschaffen, so dass diese aus der Wirkverbindung zwischen den Führungsschienen und den Förderketten gelöst werden und durch abruptes Beenden des divergierenden Transports zurück an den Geflügelkörper schnellen können. Die weiter umlaufende Förderkette ist dann - wegen der fehlenden Wirkverbindung zur zugehörigen Führungsschiene - nicht mehr in der Lage, die Endstücke der Flügel vom Geflügelkörper zu trennen bzw. zu reißen. Die Größe der Aussparung ist ausgehend von der Unterkante nach oben hin geometrisch nicht begrenzt und kann auch bedeuten, dass die Führungsschiene in Transportrichtung T hinter der Trenneinrichtung endet. Durch die erfindungsgemäße Merkmalskombination ist es möglich, den Premium-Cut bei Geflügelkörpern vollständig automatisiert auszuführen.

Eine zweckmäßige Weiterbildung der Erfindung zeichnet sich dadurch aus, dass die Schneidmesser des dritten Paares als etwa dreieckförmiges Deltamesser ausgebildet sind und die dem Geflügelkörper zugewandten Schneiden in Transportrichtung T eingangsseitig einen ersten, stumpfen Abschnitt, in der Mitte einen zweiten, scharfkantigen Abschnitt und ausgangsseitig einen dritten, stumpfen Abschnitt aufweisen. Dadurch, dass zumindest im auslaufenden Bereich der Schneidmesser ein stumpfer Abschnitt vorgesehen ist, wird ein das Endstück am Geflügelkörper belassener Teilschnitt unterstützt. Der eingangsseitig ausgebildete, ebenfalls stumpfe Abschnitt erleichtert das Einfädeln der Schneidmesser in den vom ersten Paar Schneidmesser ausgeführten Vorschnitt.

Vorteilhafterweise weist der in Transportrichtung T dritte Abschnitt der Schneide bezogen auf die Transportebene E der Geflügelkörper eine geringere Steigung auf als die beiden ersten Abschnitte. Die Steigung der Schneide verläuft ausgehend von der Transportebene E, die durch das Fördermittel definiert wird, in Transportrichtung T schräg nach oben, so dass die Geflügelkörper auf die während des Schneidens feststehenden Schneidmesser rampenförmig auflaufen. Dadurch, dass der letzte Abschnitt der Schneide gegenüber den vorherigen Abschnitten eine geringere Steigung aufweist, die auch null (horizontaler Verlauf) oder negativ (abfallend) sein kann, kann der Kontakt der Schneiden zum Geflügelkörper bzw. zum Gelenkpunkt zwischen den Endstücken und dem Geflügelkörper reduziert oder ganz aufgehoben werden, was wiederum den das Endstück am Geflügelkörper belassenen Teilschnitt unterstützt.

Eine weitere besonders bevorzugte Ausführungsform der Erfindung ist dadurch gekennzeichnet, dass die Aussparungen der Führungsschienen unmittelbar hinter dem in Transportrichtung T letzten Trennelementepaar beginnen und sich in Transportrichtung T bis zum freien Ende der Führungsschienen erstrecken. Dadurch wird quasi eine Freigabestrecke geschaffen, so dass die Endstücke zuverlässige freigegeben werden können, bevor die Förderkette den Parallellauf mit den Führungsschienen verlässt.

Eine bevorzugte Weiterbildung zeichnet sich dadurch aus, dass sich die Aussparungen jeweils ausgehend von der der Förderkette zugewandten Unterkante der Führungsschienen mindestens über die Hälfte der Höhe der Führungsschienen erstrecken. Durch die erfindungsgemäße Ausdehnung der Aussparungen in vertikaler Richtung ausgehend von der Förderkette wird ausreichend Platz geschaffen, um die Endstücke aus der Klemmung freizugeben.

Die Aufgabe wird auch durch ein Verfahren mit den eingangs genannten Schritten dadurch gelöst, dass das Trennen von Sehnen und Gewebeteilen mittels des dritten Paares Schneidmesser gegenlagenfrei und nur so tief in den Bereich des Gelenkes erfolgt, dass die Endstücke der Flügel mit mindestens einer Sehne sowie Gewebeteilen am Geflügelkörper verbleiben, wobei die Endstücke unmittelbar nach dem letzten Schnitt durch eine Aussparung in den Führungsschienen der Transporteinheit aus der Klemmung freigegeben werden. Unmittelbar bedeutet in diesem Zusammenhang, dass die Endstücke freigegeben werden, bevor sie durch die Förderkette seitlich weg vom Förderelement abgeführt werden. Die sich aus den erfindungsgemäßen Schritten ergebenden Vorteile wurden bereits im Zusammenhang mit der erfindungsgemäßen Vorrichtung erläutert, weshalb zur Vermeidung von Wiederholungen auf die entsprechenden Passagen verwiesen wird.

Weitere zweckmäßige und/oder vorteilhafte Merkmale und Ausgestaltungen ergeben sich aus den Unteransprüchen und der Beschreibung. Eine besonders bevorzugte Ausführungsform der Erfindung sowie das Verfahren werden anhand der beigefügten Zeichnung näher erläutert. In der Zeichnung zeigt:
- Fig. 1: eine Draufsicht auf die erfindungsgemäße Vorrichtung, wobei zu Zwecken der Übersichtlichkeit nur eine Seite der Vorrichtung dargestellt ist,
- Fig. 2: eine Seitenansicht der Vorrichtung gemäß Ansicht II-II,

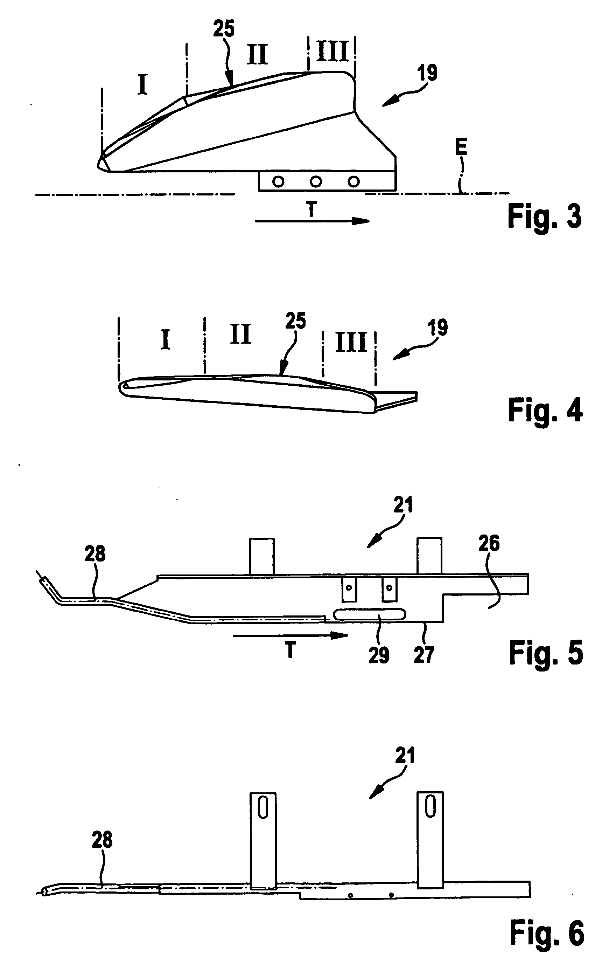

- Fig. 3: eine Seitenansicht eines Schneidmessers des dritten Paares Trennelemente,
- Fig. 4: eine Draufsicht auf das Schneidmesser gemäß Figur 3,
- Fig. 5: eine Seitenansicht einer Führungsschiene, und
- Fig. 6: eine Draufsicht auf die Führungsschiene gemäß Figur 5.

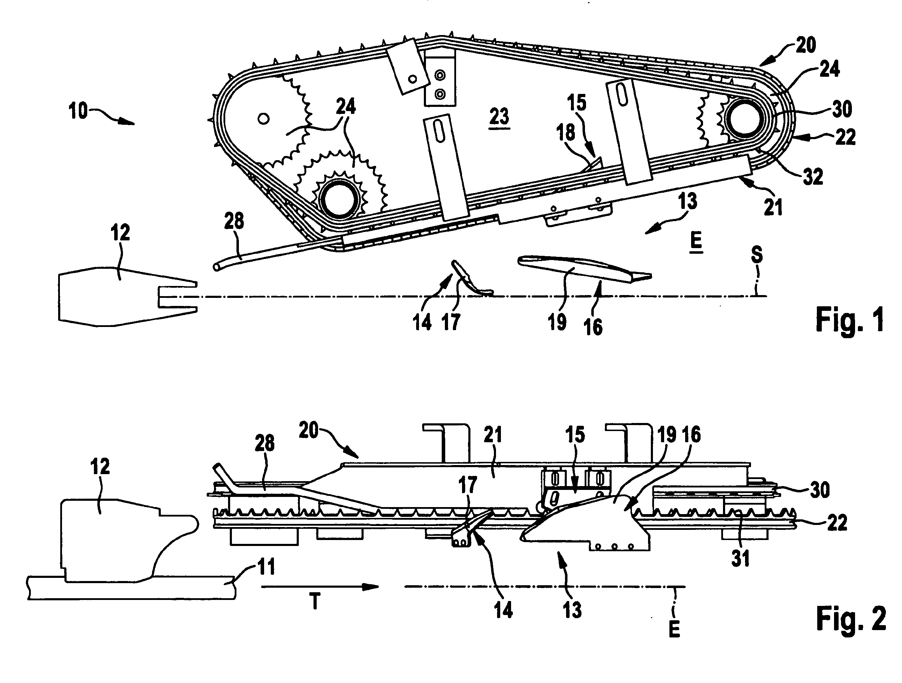

Die in der Zeichnung dargestellte Vorrichtung ist zum teilweisen Entfernen der Flügel von einem Geflügelkörper ausgebildet und eingerichtet. Die in Figur 1 dargestellte Vorrichtung 10 zum Schneiden der Flügel von Geflügelkörpern ist nur teilweise dargestellt, nämlich nur zur einseitigen Bearbeitung von Geflügelkörpern. Symmetrisch zur Symmetrieachse S ist ein entsprechender Teil der Vorrichtung 10 zur Bearbeitung der anderen Seite des Geflügelkörpers angeordnet.

Die Vorrichtung 10 umfasst ein nur schematisch dargestelltes Fördermittel 11. Das Fördermittel 11 weist mindestens einen Transportsattel 12 zum Aufnehmen und Halten der Geflügelkörper auf. Der oder jeder Transportsattel 12 ist üblicherweise fest aber lösbar am Fördermittel 11, beispielsweise einer umlaufenden Förderkette oder dergleichen, angeordnet und mit diesem umlaufend bewegbar. Die zu bearbeitenden Geflügelkörper sind auf dem Transportsattel 12 mit der Brust nach oben (Rücken zum Transportsattel hin gerichtet) und mit einem Halsansatz voraus in Transportrichtung T ausgesattelt bzw. fixiert, so dass die auf den Transportsätteln 12 positionierten Geflügelkörper in dieser Position entlang einer Trenneinrichtung 13 transportierbar sind.

Die Vorrichtung 10 umfasst weiterhin die Trenneinrichtung 13, die mehrere Trennelementepaare 14, 15, 16 aufweist. Die Trennelementepaare 14 bis 16 sind in Transportrichtung T hintereinander und/oder nebeneinander angeordnet. Das in Transportrichtung T erste und damit zuerst auf den Geflügelkörper treffende Trennelementepaar 14 weist zwei Schneidmesser 17 auf, die symmetrisch zur Symmetrieachse S angeordnet sind. Die wegen ihrer Sichelform auch als Bananenmesser bezeichneten Schneidmesser 17 sind zum Ausführen von Sehnentrennschnitten von unten von der Rückenseite des Geflügelkörpers her im Bereich des Gelenks zwischen den Endstücken der Flügel und dem Geflügelkörper ausgebildet und eingerichtet. Das zweite Trennelementepaar 15 umfasst zwei ebenfalls symmetrisch zur Symmetrieachse S angeordnete Trennmesser 18, die zum vollständigen Trennen der Flügel zwischen den Endstücken und den Mittelstücken der Flügel ausgebildet und eingerichtet sind. Das dritte Trennelementepaar 16, das in Transportrichtung T neben und/oder hinter dem zweiten Trennelementepaar 15 angeordnet ist, weist zwei auch symmetrisch zur Symmetrieachse S angeordnete Schneidmesser 19 auf, die zum Ausführen weiterer Sehnentrennschnitte von der Rückenseite des Geflügelkörpers her im Bereich der Gelenke zwischen den Endstücken der Flügel und dem Geflügelkörper ausgebildet und eingerichtet sind.

Die Vorrichtung 10 umfasst des Weiteren zwei Transporteinheiten 20, die symmetrisch zur Symmetrieachse S angeordnet sind. Jede Transporteinheit 20 erstreckt sich von einem Bereich in Transportrichtung T vor der Trenneinrichtung 13 bis hinter die Trenneinrichtung 13 und weist eine Führungsschiene 21 und eine Förderkette 22 auf. Die Führungsschienen 21 sind feststehend an einem Rahmen 23, Gestell oder dergleichen angeordnet. Die Förderketten 22 sind in einer horizontalen Ebene, die parallel zu einer durch das Fördermittel 11 definierten Transportebene E liegt, umlaufend um mindestens zwei, vorzugsweise drei Antriebs- und/oder Umlenkrollen 24 geführt. Die Führungsschienen 21 laufen seitlich zum Fördermittel 11, wobei die Führungsschienen 21 in Transportrichtung T divergierend verlaufen. Mit anderen Worten ist der Abstand der einander gegenüber liegenden Führungsschienen 21 eingangsseitig kleiner als ausgangsseitig. Ein Abschnitt der Förderketten 22 läuft unter Bildung einer Funktionseinheit mit den Führungsschienen 21 parallel zu den Führungsschienen 21. Genauer liegen die Führungsschienen 21 oberhalb eines parallel zu den Führungsschienen 21 verlaufenden Abschnitts der Förderketten 22. Die Transporteinheiten 20 bzw. die Funktionseinheiten aus Führungsschiene 21 und Förderkette 22 sind zum Erfassen und Führen der Flügel entlang der Trenneinrichtung 13 ausgebildet und eingerichtet. Während des Transports in Transportrichtung T werden die beiden Flügel durch die Klemmwirkung zwischen den Führungsschienen 21 und den Förderketten 22 einerseits und den divergierenden Verlauf der Transporteinheiten 20 andererseits zunehmend vom Geflügelkörper weg bewegt.

Dieser aus dem Stand der Technik grundsätzlich bekannte Aufbau der Vorrichtung ist nun erfindungsgemäß dadurch weitergebildet, dass die Schneidmesser 19 des dritten Trennelementepaares 16 eine gegenlagenfreie Schneidstation bilden. Mit anderen Worten ist die dritte Schneidstation unter Verzicht auf eine entsprechende Gegenlage ausschließlich durch die Schneidmesser 19 gebildet. Die Schneiden 25 der Schneidmesser 19 sind zum Ausführen von die Endstücke der Flügel am Geflügelkörper belassenen Teilschnitten ausgebildet und eingerichtet. Das bedeutet, dass die Schneiden 25 gegenüber den aus dem Stand der Technik bekannten Schneiden verkürzt ausgebildet sind, so dass die Schneiden 25 (auch als Stummelschneiden zu bezeichnen) in ihrer Schneidposition die von dem ersten Trennelementepaar 14 nicht durchtrennten Sehnen und Gewebeteile nur teilweise schneiden. Zusätzlich weisen die seitlichen Führungsschienen 21 erfindungsgemäß in Transportrichtung T hinter der Trenneinrichtung 13 jeweils eine Aussparung 26 bzw. Ausnehmung zur vertikalen Abstandsvergrößerung zwischen den Führungsschienen 21 und den Förderketten 22 auf.

Die Schneidmesser 19 des dritten Trennelementepaares 16 sind als etwa dreieckförmige Deltamesser ausgebildet. Dabei verläuft die Schneide 25 in der Schneidposition ausgehend von der Transportebene E schräg nach oben, so dass die durch die Vorrichtung 10 transportierten Geflügelkörper rampenartig auf die Schneide 25 auflaufen. Die Schneide 25 weist eingangsseitig einen ersten, stumpfen Abschnitt I auf, der zum Einfädeln bzw. Einführen der Schneidmesser 19 in den durch die Schneidmesser 17 des ersten Trennelementepaares 14 geschnittenen Spalt im Bereich des Gelenkes zwischen den Endstücken der Flügel und dem Geflügelkörper ausgebildet und eingerichtet ist. Dem Abschnitt I folgt ein zweiter, scharfkantiger Abschnitt II, der zum Trennen von Sehnen und/oder Gewebeteilen ausgebildet und eingerichtet ist. Die Schneide 25 läuft ausgangsseitig in einem dritten, stumpfen Abschnitt III aus, um ein vollständiges Durchschneiden verbliebener Sehnen und/oder Gewebeteile auszuschließen. Die einzelnen Abschnitte I bis III können bezüglich ihrer Gestalt variabel ausgebildet sein. Neben einer abgeflachten und ebenen (Abschnitte I und III) bzw. scharfkantigen (Abschnitt II) Schneide 25 kann diese auch in anderer Weise geschliffen sein, um eine veränderte Führungs- und Schnittführung zu erreichen.

Die einzelnen Abschnitte I bis III können bezüglich ihrer Steigung zur Transportebene E einheitlich ausgerichtet sein, so dass die Schnittführung neben der Gestalt der Schneide 25 auch durch eine aktive Steuerung, die weiter unten beschrieben wird, der Schneidmesser 19 beeinflussbar ist. Bevorzugt weist der Abschnitt III der Schneide 25 bezogen auf die Transportebene E eine geringere Steigung auf als die beiden ersten Abschnitte I und II. Besonders bevorzugt weist der in Transportrichtung T letzte Abschnitt III einen im Wesentlichen horizontalen Verlauf aus. In besonderen Ausführungsformen kann der Abschnitt III auch eine negative Steigung aufweisen, also gegenüber dem Abschnitt II abfallend ausgebildet sein.

Wie erwähnt, können die Trennelementepaare 14 bis 16 aktiv steuerbar oder ortsfest und starr ausgebildet sein. Bevorzugt ist eine Ausführungsform, bei der die Schneidmesser 17 und 19 der Trennelementepaare 14 und 16 aktiv steuerbar bzw. gesteuert sind, während die Trennmesser 18 des Trennelementepaares 15 fest montiert als stehende Klinge und damit ortsfest und nicht steuerbar ausgebildet sind. Die Schneidmesser 17 des ersten Trennelementepaares 14 sind z.B. über eine Kurvensteuerung, die z.B. am Transportsattel 12 ausgebildet sein kann, steuerbar bzw. gesteuert. Die Schneidmesser 19 des dritten Trennelementepaares 16 sind über Pneumatikzylinder oder dergleichen steuerbar bzw. gesteuert, wobei sich diese Steuerung auf das Bewegen der Schneidmesser 19 aus einer Warteposition in eine Schneidposition und umgekehrt bezieht. Anders ausgedrückt sind die Schneidmesser 19 seitlich wegklappbar. In der Schneidposition selbst sind die Schneidmesser 19 dann während des Schneidvorgangs stillstehend. Die Steuerung für die Schneidmesser 19 kann auch noch ausgeweitet werden, indem die Schneidmesser 19 während des Schneidvorgangs zur Beeinflussung der Schnittführung z.B. aus der Schneidposition nach unten bewegbar sind, um außer Eingriff mit dem Geflügelkörper zu gelangen. Weitere übliche Möglichkeiten der Messersteuerung sind auch einsetzbar. Andere Ausführungsformen, wo z.B. alle Trennelementepaare 14 bis 16 fest und starr oder alle Trennelementepaare 14 bis 16 aktiv gesteuert sind, sind ebenfalls möglich.

Wie zuvor beschrieben, sind die Trennelementepaare 14 bis 16 und insbesondere die Schneidmesser 19 des dritten Trennelementepaares 16 derart ausgebildet, dass die Geflügelkörper mit daran angelenkten Endstücken die Trenneinrichtung 13 verlassen. Damit die Endstücke aber nicht durch die divergierenden Transporteinheiten 20 vom Geflügelkörper getrennt bzw. gerissen werden, sind in den Führungsschienen 21 erfindungsgemäß die Aussparungen 26 ausgebildet. Die Aussparungen 26 beginnen unmittelbar hinter dem in Transportrichtung T letzten Trennelementepaar 16 und erstrecken sich in Transportrichtung T bis zum freien Ende der Führungsschienen 21 hin. Die Aussparungen 26 können auch kürzer ausgebildet sein, indem in den Führungsschienen 21 hinter der Trenneinrichtung 13 eine Art nach unten in Richtung der Förderkette 22 geöffnetes Fenster ausgebildet ist. In weiteren Ausführungsformen kann die Führungsschiene 21 auch direkt hinter der Trenneinrichtung 13 enden. Bezüglich der Höhe der Aussparungen 26 in vertikaler Richtung ausgehend von der Unterkante 27 der Führungsschienen 21 ist es erforderlich, dass diese eine die Klemmwirkung für die Endstücke der Flügel zwischen den Führungsschienen 21 und den Förderketten 22 aufhebende Größe hat. Besonders vorteilhaft ist eine Höhe, die sich mindestens über die Hälfte der Höhe der Führungsschienen 21 ausgehend von deren Unterkante 27 erstreckt. Im Hinblick auf die Gestalt der Aussparungen 26 sind Unterschiede möglich. Als besonders einfach und zur Freigabe der Endstücke zuverlässig hat sich eine rechteckförmige Gestalt der Aussparungen 26 gezeigt.

Weitere bevorzugte und/oder zweckmäßige Weiterbildungen der erfindungsgemäßen Vorrichtung 10 werden im Folgenden beschrieben. Die Führungsschienen 21 weisen eingangsseitig eine Art Fädel- bzw. Spreizelement 28 auf, mittels dem die Flügel beim Eintritt zwischen die Transporteinheiten 20 vom Geflügelkörper abgehalten werden können. Die Führungsschienen 21 weisen des Weiteren einen horizontal gerichteten Schlitz 29 auf, durch den die Trennmesser 18 des zweiten Trennelementepaares 15 hindurch geführt sind, wobei die Schneiden der Trennmesser 18 auf der dem Geflügelkörper abgewandten Seite der Führungsschienen 21 hervorstehen. Die Transporteinheiten 20 weisen neben den in einer horizontalen Ebene, und mindestens teilweise unterhalb der Führungsschienen 21 umlaufenden Förderketten 22 jeweils eine weitere Förderkette 30 auf. Die ebenfalls in der horizontalen Ebene umlaufenden Förderketten 30 sind auch um die Antriebs- und/oder Umlenkrollen 24 geführt und liegen seitlich zu den Führungsschienen 21. Die Förderketten 30 liegen oberhalb der Förderketten 22. Alle Förderketten 22, 30 weisen jeweils auf der dem Geflügelkörper bzw. den Flügeln zugewandten Seite Elemente zur Herstellung eines Formschlusses mit dem zu verarbeitenden Produkt auf. Beispielhaft weist die Förderkette 22 vertikal nach oben in Richtung der Unterkante 27 der Führungsschienen 21 gerichtete Dornen 31 auf, die die Klemmung der Flügel bzw. genauer der Endstücke unterstützen. Die Förderketten 30 weisen ebenfalls Dornen 32 auf, die horizontal in Richtung der Führungsschienen 21 gerichtet sind.

Im Folgenden wird das erfindungsgemäße Verfahrensprinzip anhand der Zeichnung näher erläutert:

Die Geflügelkörper laufen - auf dem Transportsattel 11 sitzend - mit der Brust nach oben gerichtet und mit einem Halsansatz in Transportrichtung T voraus in die Vorrichtung 10 ein. Bevor der Geflügelkörper die Trenneinrichtung 13 erreicht, werden die Flügel seitlich vom Geflügelkörper durch die Fädel- bzw. Spreizelemente 28 abgehoben bzw. abgespreizt. Durch das Abspreizen der Flügel vom Geflügelkörper werden die Flügel bei fortschreitendem Transport jeweils zwischen einer Führungsschiene 21 und einer Förderkette 22 der Transporteinheit 20 eingefädelt und geklemmt. Die Klemmung der Flügel erfolgt etwa im Bereich des Gelenkes zwischen dem Endstück und dem Mittelstück, so dass die Mittelstücke (mit oder ohne Tip) auf der dem Förderelement 11 abgewandten Seite der Führungsschiene 21 laufen, während das Endstück auf der dem Förderelement 11 zugewandten Seite der Führungsschiene 21 1 liegt. Der Geflügelkörper selbst wird weiter auf dem Transportsattel 12 in Transportrichtung T transportiert.

Derart positioniert erreicht der Geflügelkörper mit den Flügeln die Trenneinrichtung 13 und trifft mit der Rückenseite zunächst auf die Schneidmesser 17 des ersten Trennelementepaares 14. Die Schneidmesser 17 werden in ihrer Schnittführung durch den Transportsattel 12 (oder andere geeignete Steuermittel) gesteuert und schneiden im Bereich des Gelenkes von unten (also der Rückenseite) zwischen dem Endstück und dem Mittelstück Gewebeteile und einige der Sehnen ein. Die Schneidposition, in der der Schnitt ausgeführt wird, wird durch die divergierende Anordnung der Transporteinheiten 20 vorbereitet, indem die Flügel nach außen vom Geflügelkörper weg gezogen werden, so dass die Schnitte keine Knochen oder dergleichen verletzen. Genauer werden durch die auseinander laufenden Transporteinheiten 20 die Gelenkköpfe aus den Gelenkpfannen gezogen.

Durch den Transport in Transportrichtung T erreicht der mit dem Geflügelkörper bestückte Transportsattel 12 die nächst Schneidstation, nämlich die Trennmesser 18 des zweiten Trennelementepaares 15, wobei die geklemmten Flügel durch die divergierende Anordnung der Transporteinheiten immer noch weiter vom Geflügelkörper entfernt werden. Durch den Transport vorbei an den stehenden Trennmessern 18 wird das Mittelstück vollständig vom Endstück getrennt, indem die Trennmesser 18 in den Bereich des Gelenkes zwischen dem Mittelstück und dem Endstück eintauchen. Zeitgleich oder zeitlich nach hinten versetzt erfolgen die Schnitte der Schneidmesser 19 des dritten Trennelementepaares 16. Die während des Schneidvorgangs stehenden Schneidmesser 19 dringen von unten (also der Rückenseite) in den durch die Schneidmesser 17 erzeugten Spalt zwischen dem Endstück und dem Geflügelkörper und trennen weitere Sehnen und Gewebeteile.

Das Schneiden mittels der Schneidmesser 19 erfolgt ohne eine Gegenlage und nur so tief, so dass mindesten eine Sehne, vorzugsweise aber zwei oder drei Sehnen unversehrt bleiben. Anders ausgedrückt wird die Schnitttiefe durch die Gestalt und Position der Schneidmesser und/oder eine entsprechende Messersteuerung derart bestimmt, dass die Endstücke mit mindestens einer Sehne sowie Gewebeteilen am Geflügelkörper verbleiben. Mit anderen Worten werden die Schnitte der Schneidmesser 19 als die Endstücke am Geflügelkörper belassene Teilschnitte ausgeführt. Unmittelbar nach dem letzten Schnitt werden die Endstücke aus der Klemmung zwischen den Führungsschienen 21 und den Förderketten gelöst. Genauer werden die Endstücke direkt hinter den Schneidmessern 19 durch eine Aussparung 26 in den Führungsschienen 21 der Transporteinheiten 20 aus der Klemmung freigegeben, bevor die Förderketten 22 um eine der Antriebs- und/oder Umlenkrollen 24 umgelenkt und seitlich vom Fördermittel 11 weg bewegt werden. Dadurch wird das nach außen Ziehen der Flügel bzw. Endstücke beendet. Ein Abreißen der Endstücke wird damit wirksam verhindert.

Während des Überführens der Geflügelkörper mit den daran angelenkten Endstücken über die Schneidmesser 19 wird der zu schneidende Gelenkbereich zunächst über einen stumpfen Abschnitt I geführt. Das eigentliche Schneiden erfolgt in einem zweiten, scharfkantigen Abschnitt II. Nach dem Trennen von Teilen der noch vorhandenen Sehnen wird der Gelenkbereich über einen dritten, wiederum stumpfen Abschnitt III geführt, wobei im letzten Abschnitt keine Schneidfunktion mehr ausgeführt wird.

Die einzelnen Schneidmesser 17 und 19 werden bevorzugt aktiv gesteuert, während die Trennmesser 18 fest und nicht gesteuert sind. Selbstverständlich lassen sich auch die Trennmesser 18 aktiv steuern. Ebenso ist es möglich, dass die Schneidmesser 17 und 19 fest und nicht gesteuert sind.

## Patentansprüche

1. Vorrichtung (10) zum automatisierten Schneiden der Flügel von Geflügelkörpern, umfassend ein Fördermittel (11) mit mindestens einem Transportsattel (12) zum Aufnehmen und Halten der Geflügelkörper und Transportieren derselben Brust nach oben und mit dem Halsansatz voraus in Transportrichtung T durch die Vorrichtung (10) entlang einer Trenneinrichtung (13), die Trenneinrichtung (13), die mehrere jeweils symmetrisch zu beiden Seiten des Fördermittels (11) angeordnete Trennelementepaare (14, 15, 16) aufweist, nämlich ein erstes Paar Schneidmesser (17) zum Ausführen von Sehnentrennschnitten von der Rückenseite des Geflügelkörpers her im Bereich des Gelenks zwischen den Endstücken der Flügel und dem Geflügelkörper, ein zweites Paar Trennmesser (18) zum vollständigen Trennen der Flügel zwischen den Endstücken und den Mittelstücken der Flügel und ein drittes Paar Schneidmesser (19) zum Ausführen weiterer Sehnentrennschnitte von der Rückenseite des Geflügelkörpers her im Bereich der Gelenke zwischen den Endstücken der Flügel und dem Geflügelkörper, sowie ein Paar Führungsschienen (21) und ein Paar umlaufende Förderketten (22), wobei auf jeder Seite des Fördermittels (11) jeweils eine aus einer Führungsschiene (21) und einer Förderkette (22) gebildete Transporteinheit (20) angeordnet ist, die sich von einem Bereich in Transportrichtung T vor der Trenneinrichtung (13) bis hinter die Trenneinrichtung (13) erstreckt und zum Erfassen und Führen der Flügel entlang der Trenneinrichtung (13) ausgebildet und eingerichtet ist, wobei die beiden symmetrisch zum Fördermittel (11) angeordneten Transporteinheiten (20) in Transportrichtung T divergierend verlaufen, derart, dass die beiden Flügel eines Geflügelkörpers während des Transports entlang der Trenneinrichtung (13) zunehmend vom Geflügelkörper weg bewegt werden, **dadurch gekennzeichnet, dass** die Schneidmesser (19) des dritten Paares eine gegenlagenfreie Schnittstation bilden und jeweils eine Schneide (25) aufweisen, die zum Ausführen von die Endstücke der Flügel am Geflügelkörper belassenden Teilschnitten ausgebildet und eingerichtet ist, und dass die seitlichen Führungsschienen (21) in Transportrichtung T hinter der Trenneinrichtung (13) jeweils eine Aussparung (26) zur vertikalen Abstandsvergrößerung zwischen der Führungsschiene (21) und der Förderkette (22) aufweisen.

2. Vorrichtung nach Anspruch 1, **dadurch gekennzeichnet, dass** die Schneidmesser (19) des dritten Paares als etwa dreieckförmiges Deltamesser ausgebildet sind und die dem Geflügelkörper zugewandten Schneiden (25) in Transportrichtung T eingangsseitig einen ersten, stumpfen Abschnitt I, in der Mitte einen zweiten, scharfkantigen Abschnitt II und ausgangsseitig einen dritten, stumpfen Abschnitt III aufweisen.

3. Vorrichtung nach Anspruch 2, **dadurch gekennzeichnet, dass** der in Transportrichtung T dritte Abschnitt III der Schneide (25) bezogen auf die Transportebene E der Geflügelkörper eine geringere Steigung aufweist als die beiden ersten Abschnitte I und II.

4. Vorrichtung nach einem der Ansprüche 1 bis 3, **dadurch gekennzeichnet, dass** das erste Paar Schneidmesser (17) und das dritte Paar Schneidmesser (19) aktiv gesteuert sind.

5. Vorrichtung nach einem der Ansprüche 1 bis 4, **dadurch gekennzeichnet, dass** das zweite Paar Trennmesser (18) ortsfest ausgebildet und angeordnet ist.

6. Vorrichtung nach einem der Ansprüche 1 bis 5, **dadurch gekennzeichnet, dass** die Aussparungen (26) der Führungsschienen (21) unmittelbar hinter dem in Transportrichtung T letzten Trennelementepaar (16) beginnen und sich in Transportrichtung T bis zum freien Ende der Führungsschienen (21) erstrecken.

7. Vorrichtung nach einem der Ansprüche 1 bis 6, **dadurch gekennzeichnet, dass** sich die Aussparungen (26) jeweils ausgehend von der der Förderkette (22) zugewandten Unterkante (27) der Führungsschienen (21) mindestens über die Hälfte der Höhe der Führungsschienen (21) erstrecken.

8. Vorrichtung nach einem der Ansprüche 1 bis 7, **dadurch gekennzeichnet, dass** die Aussparungen (26) rechteckförmig ausgebildet sind.

9. Vorrichtung nach einem der Ansprüche 1 bis 8, **dadurch gekennzeichnet, dass** die oder jede Förderkette (22, 30) Elemente zur Herstellung einer formschlüssigen Verbindung mit dem Geflügelkörper und/oder den Flügeln bzw. Teilen davon aufweist.

10. Verfahren zum automatisierten Schneiden der Flügel von Geflügelkörpern, umfassend die Schritte:
- Zuführen der Geflügelkörper mittels eines Fördermittels (11) in den Bereich einer Trenneinrichtung (13), die mehrere, jeweils symmetrisch zu beiden Seiten eines Fördermittels (11) angeordnete Trennelementepaare (14, 15, 16) aufweist,
- Klemmen der Flügel im Bereich des Gelenks zwischen dem Endstück und dem Mittelstück des Flügels jeweils zwischen einer Führungsschiene (21) und einer Förderkette (22) einer zu beiden Seiten des Fördermittels (11) angeordneten Transporteinheit (20),
- Trennen von Sehnen und Gewebeteilen von der Rückenseite des Geflügelkörpers her im Bereich des Gelenks zwischen den Endstücken der Flügel und dem Geflügelkörper mittels eines ersten Paares Schneidmesser (17),
- vollständiges Trennen der Flügel zwischen den Endstücken und den Mittelstücken der Flügel mittels eines zweiten Paares Trennmesser (18),
- Trennen von Sehnen und Gewebeteilen von der Rückenseite des Geflügelkörpers her im Bereich des Gelenks zwischen den Endstücken der Flügel und dem Geflügelkörper mittels eines dritten Paares Schneidmesser (19), wobei
- die Flügel während des Transports in Transportrichtung T zunehmend durch die Transporteinheiten (20) nach außen vom Geflügelkörper weg gezogen werden und sämtliche Schnitte während des Transports der Geflügelkörper entlang der Trennelementepaare (14 bis 16) erfolgen,
**dadurch gekennzeichnet, dass** das Trennen von Sehnen und Gewebeteilen mittels des dritten Paares Schneidmesser (19) gegenlagenfrei und nur so tief in den Bereich des Gelenkes erfolgt, dass die Endstücke der Flügel mit mindestens einer Sehne sowie Gewebeteilen am Geflügelkörper verbleiben, wobei die Endstücke unmittelbar nach dem letzten Schnitt durch eine Aussparung in den Führungsschienen (21) der Transporteinheit (20) aus der Klemmung freigegeben werden.

## Claims

1. Apparatus (10) for automated cutting of the wings from poultry bodies, comprising a conveying means (11) having at least one transport saddle (12) for receiving and holding the poultry bodies and transporting them, with the breast facing upwards and with the neck attachment facing forwards in the direction of transport T, through the apparatus (10) along a separating device (13), the separating device (13) which has several pairs of separating elements (14, 15, 16) each arranged symmetrically on both sides of the conveying means (11), namely a first pair of cutting blades (17) for performing tendon separating cuts from the rear side of the poultry body in the region of the joint between the end pieces of the wings and the poultry body, a second pair of separating blades (18) for completely separating the wings between the end pieces and the central pieces of the wings and a third pair of cutting blades (19) for performing further tendon separating cuts from the rear side of the poultry body in the region of the joints between the end pieces of the wings and the poultry body, as well as a pair of guide rails (21) and a pair of revolving conveying chains (22), wherein on each side of the conveying means (11) is arranged a transport unit (20) which is composed of a guide rail (21) and a conveying chain (22) and which extends from a region in front of the separating device (13) in the direction of transport T to a point behind the separating device (13) and is constructed and designed for gripping and guiding the wings along the separating device (13), wherein the two transport units (20) arranged symmetrically to the conveying means (11) diverge in the direction of transport T in such a way that the two wings of a poultry body are moved increasingly away from the poultry body during transport along the separating device (13), **characterised in that** the cutting blades (19) of the third pair form a cutting station without a counter-support and each have a cutting edge (25) which is constructed and designed to perform partial cuts leaving the end pieces of the wings on the poultry body, and **in that** the lateral guide rails (21) behind the separating device (13) in the direction of transport T have one recess (26), each, to increase the vertical distance between the guide rail (21) and the conveying chain (22).

2. Apparatus according to claim 1, **characterised in that** the cutting blades (19) of the third pair are constructed as an approximately triangular delta blade, and the cutting edges (25) facing towards the poultry body have in the direction of transport T a first, blunt section I on the input side, a second, sharp-edged section II in the middle and a third, blunt section III on the output side.

3. Apparatus according to claim 2, **characterised in that** the third section III of the cutting edge (25) in the direction of transport T has a lower gradient than the first two sections I and II, referred to the plane of transport E of the poultry bodies.

4. Apparatus according to any of claims 1 to 3, **characterised in that** the first pair of cutting blades (17) and the third pair of cutting blades (19) are actively controlled.

5. Apparatus according to any of claims 1 to 4, **characterised in that** the second pair of separating blades (18) is constructed and arranged stationarily.

6. Apparatus according to any of claims 1 to 5, **characterised in that** the recesses (26) of the guide rails (21) begin immediately behind the last pair of separating elements (16) in the direction of transport T and extend as far as the free end of the guide rails (21) in the direction of transport T.

7. Apparatus according to any of claims 1 to 6, **characterised in that** the recesses (26) extend over at least half the height of the guide rails (21), each starting from the lower edge (27) of the guide rails (21) facing towards the conveying chain (22).

8. Apparatus according to any of claims 1 to 7, **characterised in that** the recesses (26) are of rectangular construction.

9. Apparatus according to any of claims 1 to 8, **characterised in that** the or each conveying chain (22, 30) has elements for producing a form-locking connection with the poultry body and/or the wings or parts thereof.

10. Method for automated cutting of the wings from poultry bodies, comprising the steps of:
- delivering the poultry bodies by a conveying means (11) into the region of a separating device (13) which has several pairs of separating elements (14, 15, 16) each arranged symmetrically on both sides of a conveying means (11),
- clamping the wings in the region of the joint between the end piece and the central piece of the wing each between a guide rail (21) and a conveying chain (22) of a transport unit (20) arranged on both sides of the conveying means (11),
- separating tendons and tissue parts from the rear side of the poultry body in the region of the joint between the end pieces of the wings and the poultry body by means of a first pair of cutting blades (17),
- completely separating the wings between the end pieces and the central pieces of the wings by means of a second pair of separating blades (18),
- separating tendons and tissue parts from the rear side of the poultry body in the region of the joint between the end pieces of the wings and the poultry body by means of a third pair of cutting blades (19), wherein
- the wings are increasingly pulled outwards away from the poultry body by the transport units (20) during transport in the direction of transport T and all cuts are made during transport of the poultry bodies along the pairs of separating elements (14 to 16),
**characterised in that** the separation of tendons and tissue parts by means of the third pair of cutting blades (19) is effected without a counter-support and only so deep into the region of the joint that the end pieces of the wings with at least one tendon as well as tissue parts remain on the poultry body, wherein the end pieces immediately after the last cut are released from clamping by a recess in the guide rails (21) of the transport unit (20).

## Revendications

1. Dispositif (10) de coupe automatisée des ailes d'un corps de volailles, comprenant
un moyen (11) de transport avec au moins un étrier (12) de transport destiné à recevoir et maintenir les corps de volailles et à les transporter, la poitrine vers le haut et la base du cou vers l'avant, dans le dispositif (10) le long d'un moyen (13) de séparation dans le sens de transport T,
le moyen (13) de séparation, comportant plusieurs paires (14, 15, 16) d'éléments de séparation disposées respectivement symétriquement des deux côtés du moyen (11) de transport, à savoir une première paire de lames (17) de coupe destinée à exécuter des découpes de séparation des tendons à partir du côté dos du corps de volaille dans la région de l'articulation entre les extrémités des ailes et le corps de volaille, une deuxième paire de lames (13) de coupe destinées à séparer complètement les ailes entre les extrémités et les parties centrales des ailes et une troisième paire de lames (19) de coupe destinée à exécuter d'autres découpes de séparation des tendons à partir du côté dos du corps de volaille dans la région de l'articulation entre les extrémités des ailes et le corps de volaille,
ainsi qu'une paire de rails (21) de guidage et une paire de chaînes (22) de convoyage périphériques, une unité (20) de transport formée d'un rail (21) de guidage et d'une chaîne (22) de convoyage étant respectivement disposée de chaque côté du moyen (11) de transport, unité de transport qui part d'une zone située avant le dispositif (13) de séparation et s'étend jusque derrière le dispositif (13) de séparation, dans le sens de transport T, et qui est conçue et aménagée afin de saisir et de conduire les ailes le long du dispositif (13) de séparation, les deux unités (20) de transport disposées symétriquement au moyen (11) de transport suivent le sens de transport T en s'éloignant l'une de l'autre, de telle sorte que les deux ailes d'un corps de volaille s'écartent de plus en plus du corps de volaille au fur et à mesure du transport le long du dispositif (13) de séparation,
**caractérisé en ce que** les lames (19) de coupe de la troisième paire forment une station de découpe sans butée et comportent respectivement une lame conçue et aménagée afin d'exécuter des découpes partielles laissant les extrémités des ailes sur le corps de volaille,
et **en ce que** les rails (21) de guidage latéraux comportent respectivement, derrière le dispositif (13) de découpe, dans le sens de transport T, une échancrure (26) destinée à accroître la distance verticale entre le rail (21) de guidage et la chaîne (22) de convoyage.

2. Dispositif selon la revendication 1, **caractérisé en ce que** les lames (19) de coupe de la troisième paire ont la forme de lames delta sensiblement triangulaires et que les lames (25) appliquées sur le corps de volaille comportent, dans le sens de transport, une première section I émoussée, côté entrée, une deuxième section II effilée, au milieu, et une troisième section III émoussée, côté sortie.

3. Dispositif selon la revendication 2, **caractérisé en ce que** la troisième section III de la lame (25), dans le sens de transport T, comporte une inclinaison inférieure à celles des deux premières sections I est II par rapport au plan de transport E des corps de volailles.

4. Dispositif selon l'une des revendications 1 à 3, **caractérisé en ce que** la première paire de lames (17) de coupe et la troisième paire de lames (19) de coupe sont commandées activement.

5. Dispositif selon l'une des revendications 1 à 4, **caractérisé en ce que** la deuxième paire de lames (18) de coupe est conçue et aménagée de façon fixe.

6. Dispositif selon l'une des revendications 1 à 5, **caractérisé en ce que** les échancrures (26) des rails (21) de guidage commencent juste derrière la dernière paire (16) d'éléments de séparation, dans le sens de transport T, et s'étendent dans le sens de transport T jusqu'à l'extrémité libre des rails (21) de guidage.

7. Dispositif selon l'une des revendications 1 à 6, **caractérisé en ce que** les échancrures (26) partent respectivement du bord inférieur (27) tourné vers la chaîne (22) de convoyage, des rails (21) de guidage, et s'étendent au moins sur la moitié de la hauteur des rails (21) de guidage.

8. Dispositif selon l'une des revendications 1 à 7, **caractérisé en ce que** les échancrures (26) sont de forme rectangulaire.

9. Dispositif selon l'une des revendications 1 à 8, **caractérisé en ce que** la, ou chaque, chaîne (22, 30) de convoyage comporte des éléments destinés à l'établissement d'une liaison par complémentarité de forme avec le corps de volaille et/ou les ailes, ou avec des parties de ceux-ci.

10. Procédé de coupe automatisée des ailes de corps de volailles, comprenant les étapes suivantes :
- amender les corps de volailles à l'aide d'un moyen (11) de transport dans la zone d'un dispositif (13) de découpe, qui comporte plusieurs paires (14, 15, 16) d'éléments de séparation disposées respectivement symétriquement des deux côtés du moyen (11) de transport,
- pincer les ailes dans la région de l'articulation entre l'extrémité et la partie centrale de l'aile, respectivement entre un rail (21) de guidage et une chaîne (22) de convoyage d'une unité (20) de transport disposée des deux côtés du moyen (11) de transport,
- séparer les tendons et les tissus à partir du côté dos du corps de volaille dans la région de l'articulation entre les extrémités des ailes et le corps de volaille à l'aide d'une première paire de lames (17) de coupe,
- séparer complètement les ailes entre les extrémités et les parties centrales des ailes à l'aide d'une deuxième paire de lames (18) de coupe,
- séparer les tendons et les tissus à partir du côté dos du corps de volaille dans la région de l'articulation entre les extrémités des ailes et le corps de volaille à l'aide d'une troisième paire de lames (19) de coupe,
- les ailes étant de plus en plus tirées vers l'extérieur et écartées du corps de volaille par les unités (20) de transport au fur et à mesure du transport dans le sens de transport T, et toutes les coupes étant effectuées pendant le transport des corps de volailles le long des paires (14 à 16) d'éléments de séparation,
**caractérisé en ce que** la séparation des tendons et des tissus à l'aide de la troisième paire de lames (19) de coupe est effectuée sans butée et seulement à une profondeur, dans la région de l'articulation, telle que les extrémités des ailes restent attachées au corps de volaille au moins par un tendon ainsi que par des tissus, le pincement des extrémités étant interrompu juste après la dernière coupe du fait d'une échancrure pratiquée dans les rails (21) de guidage de l'unité (20) de transport.
